# EUROPEAN PATENT SPECIFICATION

(11) **EP 3 663 025 B1**
(45) Date of publication and mention of the grant of the patent: **28.06.2023**
(21) Application number: 18870578.4
(22) Date of filing: 30.08.2018
(51) Int. Cl.: B23B 29/24, B23B 3/16, B23B 7/04, B23B 21/00, B23B 29/32

(54) **LATHE WITH TOOL UNIT MOUNTED THERETO**
DREHBANK MIT DARAN BEFESTIGTEM WERKZEUGAGGREGAT
TOUR SUR LEQUEL EST MONTÉE UNE UNITÉ D'OUTIL

(30) Priority: 24.10.2017 JP 2017204906
(43) Date of publication of application: 10.06.2020
(73) Proprietor: Star Micronics Co., Ltd., Shizuoka-shi, Shizuoka 422-8654 (JP)
(72) Inventor: KAWASUMI Masahiro, Shizuoka-shi Shizuoka 422-8654 (JP)
(74) Representative: Manitz Finsterwald Patent- und Rechtsanwaltspartnerschaft mbB
(86) International application number: PCT/JP2018/032201
(87) International publication number: WO 2019/082508

(56) References cited:
- EP-A1- 2 058 071
- WO-A1-2008/016076
- JP-A- 2014 515 995
- JP-U- S5 417 990
- JP-U- S5 417 990
- JP-U- S6 367 005
- US-A1- 2004 129 120
- US-A1- 2007 044 290
- US-A1- 2014 251 097

## Description

### TECHNICAL FIELD

The present invention relates to a lathe with a tool unit attached thereto.

### BACKGROUD ART

An NC (numerical control) lathe provided with a front spindle and a back spindle which each rotates a workpiece on a spindle axis and further with a turret is well known. In an NC lathe disclosed in JP 2014-518777 A, a tool turret head having a dozen of turret surfaces is mounted on a second tool post in a rotatable manner around a turret axis. The second tool post is rotated on a B-axis perpendicular to the turret axis. The tool turret head is in a position to deviate from the B-axis. The second tool post on which the tool turret head is mounted is rotated on the B-axis while the tool turret head is rotated on the turret axis perpendicular to the B-axis.

US 2014/251097 A1 discloses a lathe according to the preamble of claim 1.

### TECHNICAL PROBLEM

When a workpiece is machined by a tool unit attached to a turret surface of a turret head in a lathe having twelve or many turret surfaces, another tool unit attached to an adjacent turret surface has a risk of interference with a spindle depending on a position of the turret head. Such interference risk can be avoided by positioning a tool edge (a machining point) apart from a chuck in the Z-axis direction (the spindle axis direction). Such edge positioning, however, would make a heavy cut performance difficult since the tool edge is apart from the chuck holding the workpiece. Alternatively, the tool edge can be brought near the chuck without the interference by removing the tool units from the adjacent turret surfaces. The alternative, however, would reduce the number of the tool units, thereby making complicated performance unavailable. Such problem resides in various kinds of lathes.

The purpose of the invention is to provide a technology capable of improving machining performance of the lathe.

### TECHNICAL SOLUTION

The problem underlying the present invention is solved by a lathe having the features of claim 1.

### ADVANTAGEOUS EFFECTS

The invention provides a technology capable of improving machining performance of the lathe.

### BRIEF DESCRIPTION OF THE DRAWINGS

FIG. 1 is a plan view of a schematically illustrated NC lathe.
FIG. 2 is a perspective view of a schematically illustrated turret head.
FIG. 3 is a perspective view of a schematically illustrated turret head where a plurality of tool units are attached.
FIG. 4 is a plan view of a schematically illustrated turret head where a plurality of tool units are attached.
FIG. 5 is a side view of a schematically illustrated turret driving unit.
FIG. 6 is a partial sectional view of part of a turret head where a plurality of tool units are attached.
FIG. 7 is a side view of a schematically illustrated opposite tool post driving unit.
FIG. 8A and FIG. 8B each is a perspective view of a schematically illustrated turning tool unit.
FIG. 9A schematically shows a condition in which a workpiece held by a front spindle is in a position between a first tool unit and a second tool unit.
FIG. 9B schematically shows a condition in which a workpiece held by a back spindle is in a position between a first tool unit and a second tool unit.
FIG. 10 schematically shows an area that a spindle possibly occupies relatively with respect to the first tool unit working on the workpiece.
FIG. 11 is a plan view of an area that a spindle possibly occupies relatively with respect to the first tool unit working on the workpiece.
FIG. 12 is a plan view of a schematically illustrated second tool unit inversely attached to an attaching position of a turret surface at an angle of 180 degrees.
FIG. 13 schematically shows that the workpiece held by a chuck of the front spindle is in a position between the first tool unit and the second tool unit of an opposite tool post.

### MODE FOR INVENTION

Hereinafter, an embodiment of the present invention will be described. The invention is not limited to the exemplary embodiment and the features disclosed herein are not necessarily essential to the invention.

### (1) Summary of technnology included in the present invention:

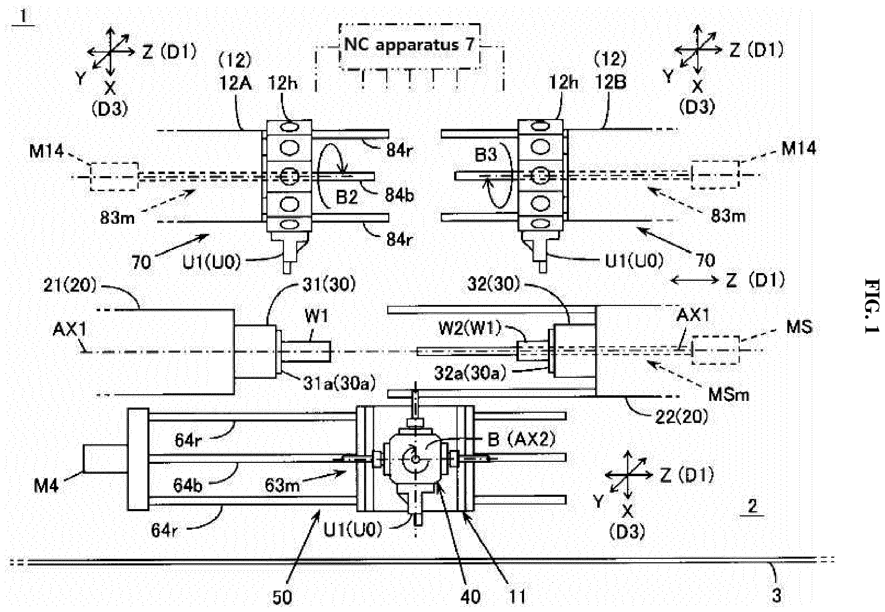

Technology included in the invention will be described with reference to FIG. 1 to FIG. 13. The drawings only schematically show an example of the invention. They may have a mismatch to each other due to different maginification in each direction. Each element denoted by a symbol is only an example.

(Embodiment 1) A lathe 1 of an embodiment of the invention comprises a spindle 30, a turret head 40, 12h and a switching driving unit 51. The spindle 30 rotates a workpiece W1 on a spindle axis AX1. The turret head 40, 12h has a turret surface 41 having a plurality of attaching positions P0 to which tool units U0 are attached. The switching driving unit 51 switches the tool units U0 for use to machine the workpiece W1. The plurality of attaching positions P0 comprises a first attaching position P1 and a second attaching position P2. The first attaching position P1 and the second attaching position P2 are adjacent to each other in a tool unit attaching direction D4. The tool unit attaching direction D4 is perpendicular to a spindle axis direction D1 extended along the spindle axis AX1. A first tool unit U01 is removably attached to the first attaching position P1. A second tool unit U02 is removably attached to the second attaching position P2. The second tool unit U02 is of such shape as avoiding an area A0 that the spindle 30 possibly occupies relatively with respect to the first tool unit U01 working on the workpiece W1. When a rotary tool unit is attached to one of the first attaching position P1 and the second attaching position P2, a machining point P10 acting on the workpiece W1 of the second tool unit U02 working on the workpiece W1 is deviated to the side of the spindle 30 in the spindle axis direction D1 from a rotational center CE1 of the rotary tool unit across the turret surface 41.

The second tool unit U02 of a shape avoiding the area A0 that the spindle 30 possibly occupies relatively with respect to the first tool unit U01 does not interfere with the spindle 30 when the adjacent first tool unit U01works on the workpiece W1. Further, the machining point P10 of the second tool unit U02 can be brought close to the chuck of the spindle 30 for a heavy-cut performance. The embodiment provides a technology capable of improving machining performance of the lathe.

A first direction may be referred to as perpendicular to a second direction if image of straight lines of both directions projected on a plane parallel to both directions make an angle of substantially 90 degrees. Straight lines of both directions do not necessarily intersect in a three-dimensional space. Accordingly, the tool unit attaching direction is perpendicular to the spindle axis direction, but a straight line connecting the first attaching position and the second attaching position does not necessarily intersect with the spindle axis.

The area that the spindle possibly occupies with respect to the first tool is the area that the spindle possibly occupies in a view from the first tool unit based on the positional relationship with the spindle. The area may not be limited to a spindle movable area.

The machining point is deviated to the side of the spindle in the spindle axis direction from the rotational center. When perpendicular lines are drawn from the machining point, the rotational center, and the spindle to the spindle axis, the line drawn from the machinig point is closer to the line drawn from the spindle than to the line drawn from the rotational center. The direction of a straight line connecting the machining point and the rotational center is not necessarily along the spindle axis direction.

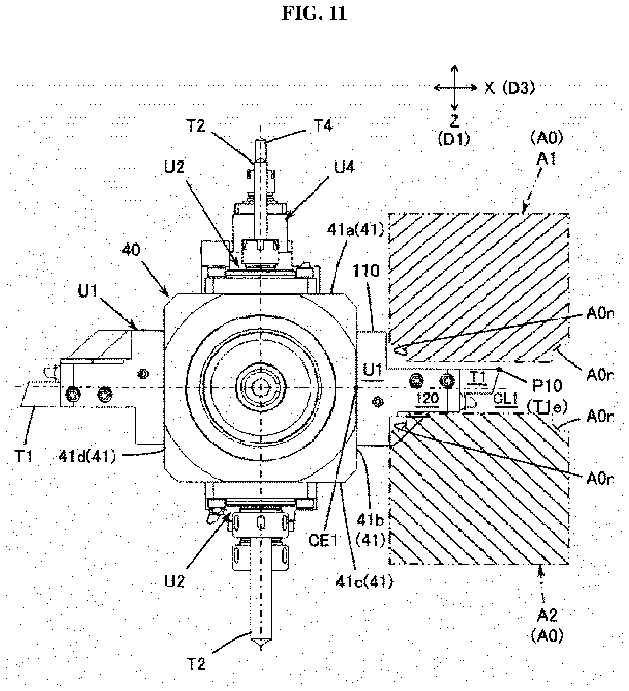

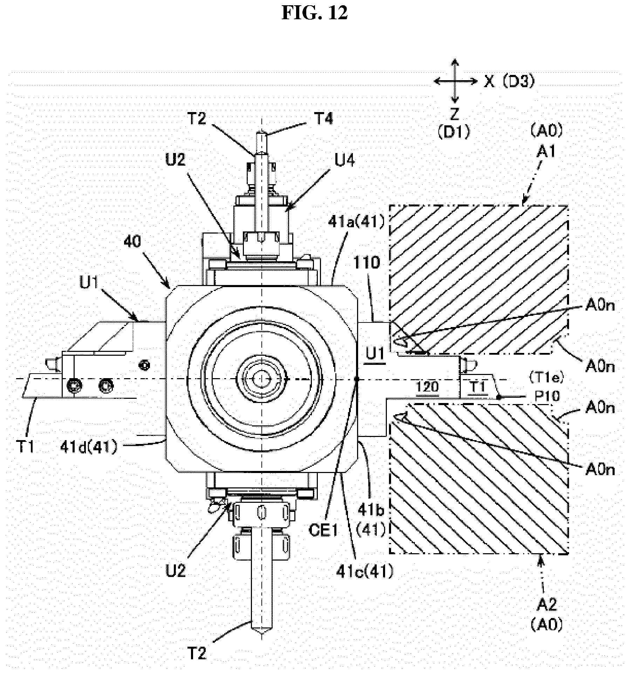

(Embodiment 2) The spindle 30 may comprise a front spindle 31 and a back spindle 32 opposite to each other in the spindle axis direction D1. The second tool unit U02 may be attached to the second attaching position P2 in a first orientation (for example, the orientation of the turning tool unit U1 on the turret surface 41b in FIG. 11) where the machining point P10 is deviated to the side of the front spindle 31 in the spindle axis direction D1 from the rotational center CE1. The second tool unit U02 may be attached to the second attaching position P2 in a second orientation (for example, the orientation of the turning tool unit U1 on the turret surface 41b in FIG. 12) where the machining point P10 is deviated to the side of the back spindle 32 in the spindle axis direction D1 from the rotational center CE1. The orientation of the second tool unit U02 attached to the attaching position P0 may depend on the need for front machining use and back machining use, which reduces types of the tool units attached to the turret head.

(Embodiment 3) The second tool unit U02 may comprise an attaching part 110 to be attached to the second attaching position P2 of the turret surface 41 and an tool holding part 120 in a position on the side apart from the turret surface 41 where the attaching part 110 is attached. The tool holding part 120 may be shorter than the attaching part 110 in length in the spindle axis direction D1 as measured when the second tool unit U02 is in a position working on the workpiece. The embodiment provides a lathe with tool unit attached thereto where the tool unit U0 is of a favorable shape avoiding the interference between the spindle 30 and the tool unit U0 adjacent to in the tool unit attaching direction D4 perpendicular to the spindle axis direction D1.

(Embodiment 4) The second tool unit U02 may be a turning tool unit U1 having a turning tool T1. The embodiment provides a lathe with turning tool unit attached thereto desired for a heavy-cut performance.

### (2) Configuration of the lathe

FIG. 1 schematically shows the NC lathe 1 of stationary headstock type as an example of the lathe. The lathe 1 may comprise a front headstock 21, a back headstock 22, a turret 11, and opposite tool posts 12A and 12B, which are all mounted on a bed 2. The lathe 1 may further comprise a housing 3. The front spindle 31 is supported on the front headstock 21. The back spindle 32 is supported on the back headstock 22. The front headstock 21 and the back headstock 22 are collectively referred to as a headstock 20. The front spindle 31 and the back spindle 32 are collectively referred to as the spindle 30. The opposite tool posts 12A and 12 B are collectively referred to as the opposite tool post 12. The turret 11 and the opposite tool post 12 are collectively referred to as a tool post. A tool post with the tool unit U0 attached thereto is referred to as a tooling system. There further is an NC apparatus 7 which numerically controls the headstock 20 and the tool posts 11 and 12. The position thereof is not limited to the FIG. 1 layout.

The back headstock 22 on which the back spindle 32 is supported is movable in the Z-axis direction while the tool posts 11 and 12 are movable in the X-axis, Y-axis, and Z-axis directions. The X-axis, Y-axis, and Z-axis directions may be perpendicular to each other. They may not be perpendicular and may be different directions due to design reasons. They are all within the scope of the invention. The word "perpendicular" is not strictly limited to 90 degrees and may be approximately 90 degrees due to design reasons. The word "same" with respect to the direction or the position includes the meaning of substantially same. Positional relationship of the components is only an example. The left-right direction may be replaced by the up-down direction or the front-back direction. The up-down direction may be replaced by the left-right direction or the front-back direction. The front-back direction may be replaced by the left-right direction or the up-down direction. The rotational direction may be reversed. They are all within the scope of the invention. The front headstock 21 on which the front spindle 31 is supported may not be movable in any of the X-axis, Y-axis, and Z-axis directions.

The bed 2 may be a table on which the components such as the turret 11, the opposite tool post 12, and the headstock 20 are directly or indirectly supported.

The front spindle 31 and the back spindle 32 may be opposite to each other in the Z-axis direction. The back headstock 22 on which the back spindle 32 is supported may be bidirectionally movable in the Z-axis direction by a Z-axis direction driving motor MS (servo motor) and a Z-axis direction feed mechanism MSm respectively mounted on the bed 2. The spindle 30 supported on the headstock 20 may be provided with a chuck 30a for releasably holding the workpiece W1. The workpiece W1 is rotated on the spindle axis AX1 extended in the longitudinal direction of the workpiece W1. The chuck 30a may comprise a chuck 31a of the front spindle 31 and a chuck 32a of the back spindle 32. The workpiece W1, which is a bar material inserted in the longitudinal direction from the rear side or the front side, may be protruded at a given amount to be held by the chuck 31a. The front side of the workpiece W1 may be machined by the turret 11 and/or the opposite tool post 12A for front machining use. The back headstock 22 may be moved in the Z-axis direction toward the front headstock 21 to receive the front-machined workpiece W2 by the back spindle 32. The workpiece W2 inserted in the Z-axis direction is releasably held by the chuck 32a and rotated on the spindle axis AX1. The front-machined workpiece W2 is within the scope of the workpiece W1. The workpiece W2 held by the chuck 32a of the back spindle 32 may be cut off by a cut-off tool (a tool T0). The back side of the workpiece W2 is then machined by the turret 11 and/or the opposite tool post 12B for back machining use. There may be provided a single common opposite tool post bidirectionally movable in the Z-axis direction. The tool unit U0 attached to the common opposite tool post may be used to work on both the workpiece W1 held by the chuck 31a of the front spindle 31 and the workpiece W2 held by the chuck 32a of the back spindle 32. Alternatively, three or more opposite tool posts may be provided. On the turret side too, one or more tool posts may be provided in addition to the turret 11.

The turret 11 may comprise the turret head 40 and a turret driving unit 50. The turret 11 is available for front machining use on the workpiece W1 held by the front spindle 31 and for back machining use on the workpiece W2 held by the back spindle 32. A plurality of tool units U0 may be attached to the turret head 40, among which the tool unit U0 for use is selected. The turret head 40 may be bidirectionally moved in the X-axis, Y-axis, and Z-axis directions and rotated on a B-axis by the operation of the turret driving unit 50.

The opposite tool post 12A for front machining use may comprise the turret head 12h and an opposite tool post driving unit 70. The opposite tool post 12A may be arranged on the opposite side of the turret head 40 across the workpiece W1 in the X-axis direction (an example of the tool post opposite direction D3). A plurality of tool units U0 may be attached to the turret head 12h, among which the tool unit for use is selected. The turret head 12h may be bidirectionally moved in the X-axis, Y-axis, and Z-axis directions and rotated on the B2-axis by the operation of the opposite tool post driving unit 70.

The opposite tool post 12B for back machining use may comprise the turret head 12h and the opposite tool post driving unit 70. The opposite tool post 12B may be arranged on the opposite side of the turret head 40 across the workpiece W2 in the X-axis direction (an example of the tool post opposite direction D3). The symbols are commonly used for the tool posts 12A and 12B whose configuration is the same. A plurality of tool units U0 may be attached to the turret head 12h, among which the tool unit for use is selected. The turret head 12h may be bidirectionally moved in the X-axis, Y-axis, and Z-axis directions and rotated on the B3-axis by the operation of the opposite tool post driving unit 70.

The tool posts 11 and 12 and the tool unit U0 are fully described later.

The NC apparatus 7 may comprise a CPU (Central Processing Unit), a ROM (Read Only Memory) for storing an application program, a RAM (Random Access Memory) for storing an NC program, a timer, and an interface. The CPU uses the RAM as a work area to execute the application program, receives an input from a not-shown operation panel and an external computer, and executes the NC program. An operator may use the operation panel and the external computer to store the NC program in the RAM.

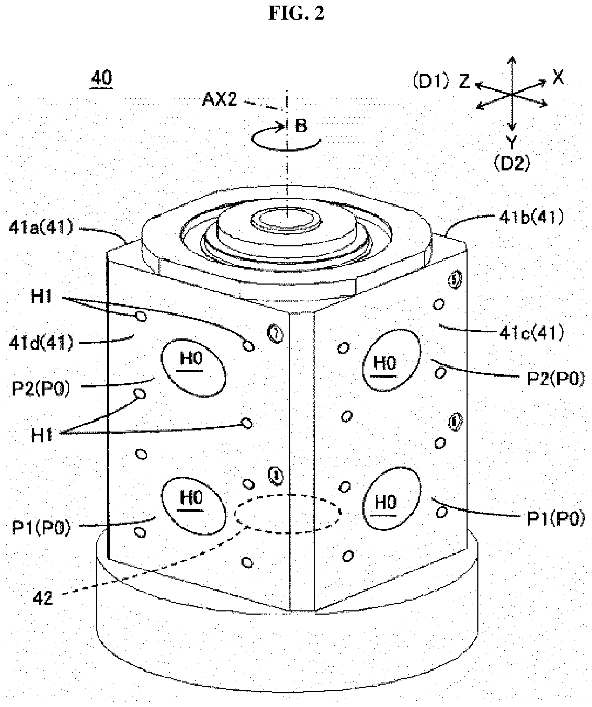

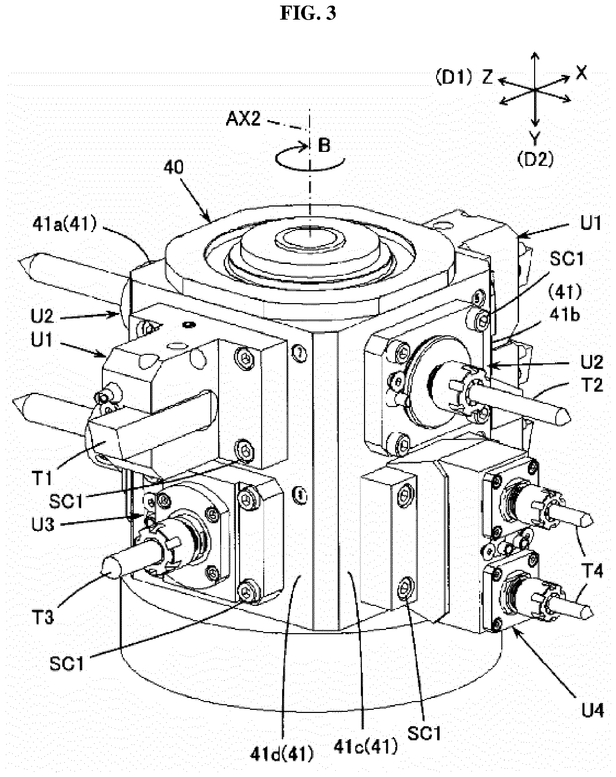

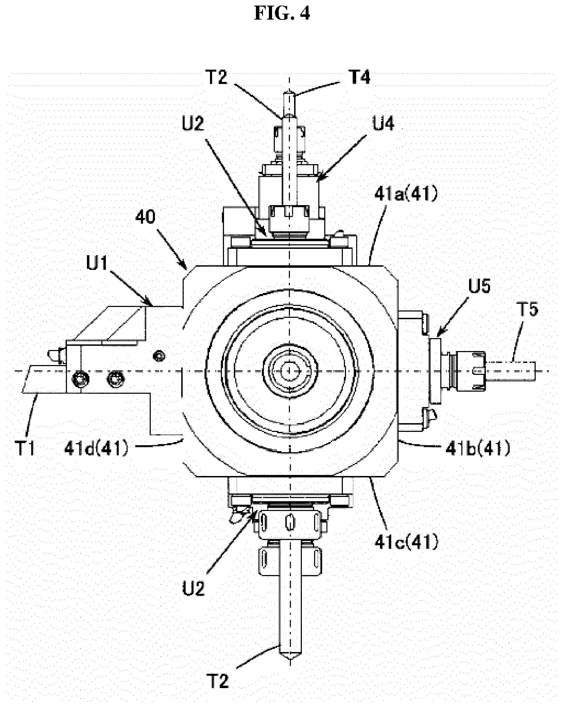

FIG. 2 is a perspective view of the schematically illustrated turret head 40. FIG. 3 is a perspective view of the turret head 40 where a plurality of tool units U0 are attached. FIG. 4 is a plan view of the turret head 40 where a plurality of tool units U0 are attached. The tool units U0 in FIG. 3 are different from the tool units U0 in FIG. 4. The turret head 40 may have a plurality of turret surfaces 41 where the tool unit U0 can be radially attached around the B-axis (the indexing axis AX2). As shown in FIG. 2 to 4, the turret head 40 has four turret surfaces 41a to 41d around the B-axis (the indexing axis AX2) at 90 degrees intervals. The turret surfaces 41a to 41d are collectively referred to as the turret surface 41. The turret surface 41a is opposite the turret surface 41c. The turret surface 41b is opposite the turret surface 41d. The turret surface 41a makes an angle of 90 degrees with respect to the adjacent turret surface 41b and with respect to the adjacent turret surface 41d. The turret surface 41c makes an angle of 90 degrees with respect to the adjacent turret surface 41d and with respect to the adjacent turret surface 41b.

The turret surfaces 41 each has a plurality of attaching positions P0 provided in the Y-axis direction (an example of the indexing axis direction D2 and the tool unit attaching direction D4) extended in the B-axis direction (AX2). The attaching positions P0 may comprise the first attaching position P1 on the lower side and the second attaching position P2 on the upper side in the Y-axis direction (D2, D4). They are collectively referred to as the attaching positions P0. The number of the attaching positions may be three or more. Part of the turret surfaces 41 may have only a single attaching position. Part of the tool unit U0 may be inserted into a through-hole H0 formed in the attaching position P0. A plurality of screw holes H1 (four in FIG. 2) may be formed on the turret surface 41 around the though-hole H0. The tool unit U0 may be attached at the center of the hole H1 by tightening a screw SC1 in the screw hole H1. On the turret surfaces 41 each, the tool units U0 can be attached in the shape of a comb and in a detachable manner.

The turret head 40 may be provided with a rotation driving unit 42 in a position corresponding to the lower attaching position P1. A rotary tool unit can be removably attached on the turret surfaces 41 each. When a rotary tool unit is attached to the attaching position P1 of the turret surface 41a, 41b, 41c, and 41, a rotary tool of the rotary tool unit is driven by the rotation driving unit 42. The rotation driving unit 42 may be provided in the position corresponding to the upper attaching position P2. The rotation driving unit corresponding to the lower attaching position P1 may be removed.

As shown in FIG. 3 or FIG. 4, the tool unit U0 may comprise a stationary tool unit and a rotary tool unit. The stationary tool unit may comprise a turning tool unit U1 and a drill unit U2. The rotary tool unit may comprise a rotary drill unit U3 and U4, an endmill unit U5, and a polygon cutter unit (not shown). The turning tool unit U1 has a turning tool T1. The drill unit U2 has a drill T2. The rotary drill unit U3 has a rotary drill T3. The rotary drill unit U4 has a plurality of rotary drills T4. The endmill unit U5 has an endmill T5 as a rotary tool. The turning tool T1, the drill T2, the rotary drills T3 and T3, and the endmill T5 are collectively referred to as the tool T0.

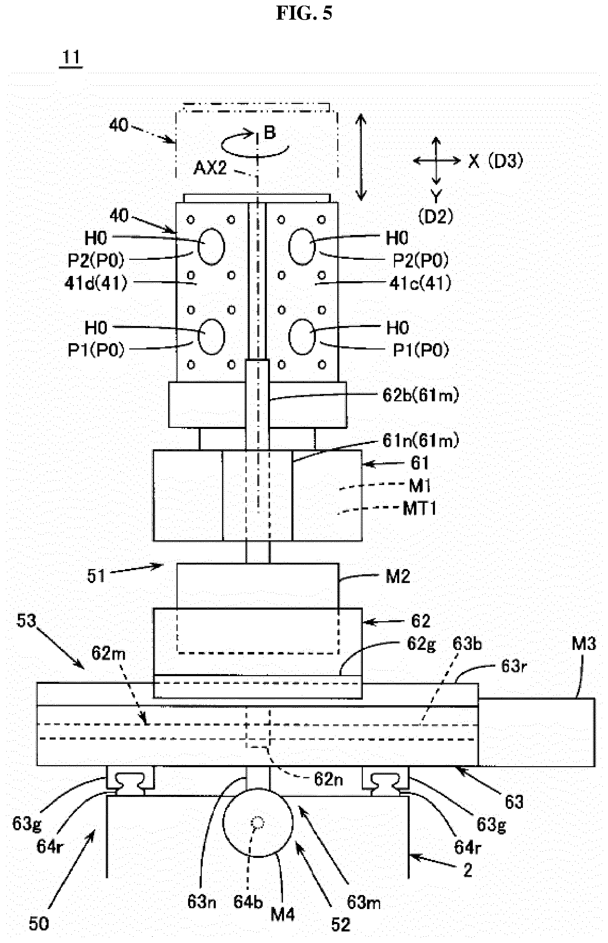

FIG. 5 schematically shows the turret driving unit 50 which drives the turret head 40 in the X-axis direction (an example of the tool post opposite direction D3), Y-axis direction (an example of the indexing axis direction D2), the Z-axis direction (an example of the spindle axis direction D1), and the rotational direction. The turret driving unit 50 may be of various modified configurations.

The turret driving unit 50 may comprise an elevator 61 containing a rotation driving motor M1 for rotating the turret head 40 on the B-axis (AX2). The rotation driving motor M1 may be a servo motor which rotates the turret head 40 on the B-axis according to a command from the NC apparatus 7. The B-axis is a control axis for rotation used to index the tool unit U0. The elevator 61 may be provided with a nut 61n to be engaged with a ball screw 62b whose longitudinal direction is along the Y-axis direction. The ball screw 62b and the nut 61n constitute a feeding mechanism 61m which bidirectionally moves the turret head 40 on the elevator 61 in the Y-axis direction.

The turret driving unit 50 may further comprise an X-axis direction slide bed 62 provided with a Y-axis direction driving motor M2 which bidirectionally moves the turret head 40 in the Y-axis direction. The Y-axis direction driving motor M2 is a servo motor which rotationally drives the ball screw 62b according to a command from the NC apparatus 7. The turret head 40 on the elevator 61 is moved by the feeding mechanism 61m in the Y-axis direction. The Y-axis is a control axis for rotation and for tool selection used to select the tool unit U0. The turret driving unit 50 rotates the turret head 40 on the B-axis (AX2) and moves the turret head 40 in the Y-axis direction (D2) to switch the tool units U0 for use. The rotation driving motor M1, the Y-axis direction driving motor M2, the elevator 61, and the feeding mechanism 61m constitute the switching driving unit 51.

The X-axis direction slide bed 62 may comprise a pair of rails 63r, a pair of guides 62g slidably engaged with the rails 63r in the X-axis direction, and a nut 62n engaged with a ball screw 63b whose longitudinal direction is along the X-axis direction. The ball screw 63b with the nut 62n and the X-axis direction slide bed 62 constitute a feeding mechanism 62m which bidirectionally moves the turret head 40 in the X-axis direction.

The turret driving unit 50 may further comprise a Z-axis direction slide bed 63 provided with an X-axis direction driving motor M3 which bidirectionally moves the turret head 40 in the X-axis direction. The X-axis direction driving motor M3 is a servo motor which rotationally drives the ball screw 63b according to a command from the NC apparatus 7. The turret head 40 and the X-axis direction slide bed 62 is moved by the feeding mechanism 62m in the X-axis direction. As described, the turret driving unit 50 moves the turret head 40 in the X-axis direction (D3). The X-axis direction driving motor M3, the X-axis direction slide bed 62, and the feeding mechanism 62m constitute the first opposite driving unit 53.

The Z-axis direction slide bed 63 may comprise a pair of rails 64r, a pair of guides 63g slidably engaged with the rails 64r in the Z-axis direction, and a nut 63n engaged with a ball screw 64b whose longitudinal direction is along the Z-axis direction. The ball screw 64b with the nut 63n and the Z-axis direction slide bed 63 constitute a feeding mechanism 63m which bidirectionally moves the turret head 40 in the Z-axis direction.

The turret driving unit 50 may further comprise a Z-axis direction driving motor M4 which bidirectionally moves the turret head 40 in the Z-axis direction. The Z-axis direction driving motor M4 is mounted on the bed 2. The Z-axis direction driving motor M4 is a servo motor which rotationally drives the ball screw 64b according to a command from the NC apparatus 7. The turret head 40 on the Z-axis direction slide bed 63 is moved by the feeding mechanism 63m in the Z-axis direction. The tool unit U0 attached to the turret head 40 can be brought to work on the workpiece W1 held by the front spindle 31 and the workpiece W2 held by the back spindle. As described, the turret driving unit 50 moves the turret head 40 in the Z-axis direction (D1). The Z-axis direction driving motor M4, the Z-axis direction slide bed 63, and the feeding mechanism 63m constitute the Z-axis driving unit 52.

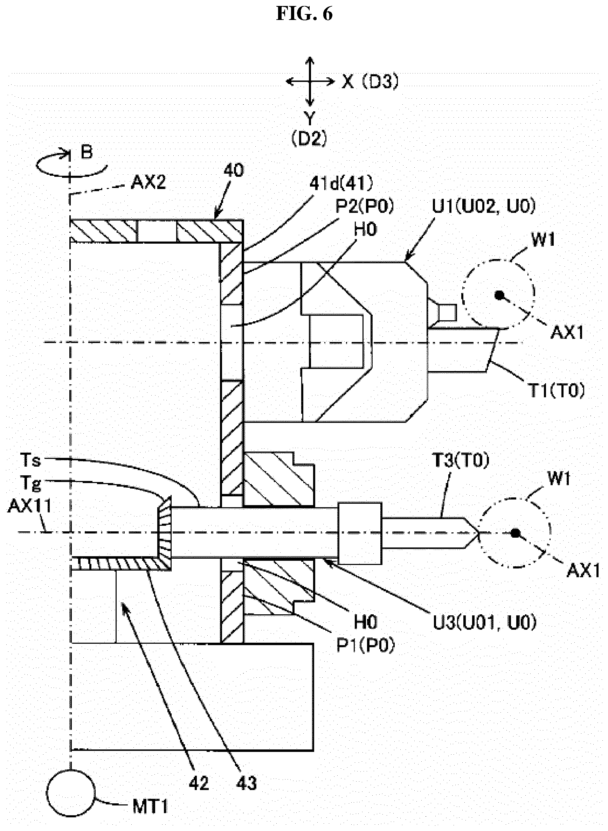

FIG. 6 is a partial sectional view of part of the turret head 40 to which a plurality of tool units U0 are attached. The turret head 40 may be of various modified configurations. On the turret surface 41d, the rotary drill unit U3 is attached to the lower attaching position P1 while the turning tool unit U1 is attached to the upper attaching position P2. The rotation driving unit 42 provided in a position corresponding to the lower attaching position P1 comprises a driving gear 43 and a rotary tool driving motor MT1. The driving gear 43 is engaged with a driven gear Tg of a rotary tool shaft Ts of the rotary tool unit. The rotary tool driving motor MT1 rotates the driving gear 43 on the B-axis (AX2). The gears 43 and Tg may be bevel gears and other gears of any type which transmit the torque of the rotary tool driving motor MT1 to the rotary tool. The rotary tool driving motor MT1 rotates the rotary tool (such as the rotary drill T3) via the gears 43 and Tg according to a command from the NC apparatus 7. The rotary tool shaft Ts having a rotating axis AX11 is extended across the turret surface 41. The rotating axis AX11 perpendicular to the B-axis (AX2) is extended through the center of the through-hole H0 of the attaching position P1. The rotary tool attached on an extended line of the rotating axis AX11 is rotated on the rotating axis AX11 in a position across the attaching position P1.

The tool units U0 for use may be switched by rotating the turret head 40 around the B-axis by the rotation driving motor M1 and by moving the turret head 40 in the Y-axis direction (D2) by the Y-axis direction driving motor M2. For example, the turning tool unit U1 attached to the attaching position P2 of the turret surface 41d is intended for front machining use. The rotation driving motor M1 may be controlled by the NC apparatus 7 to position the turret surface 41d opposite the spindle 31 and the Y-direction driving motor M2 may be controlled by the NC apparatus 7 to position the upper attaching position P2 opposite the spindle axis AX1. The NC apparatus 7 may control the turret head 40 in the X-axis, Y-axis, and Z-axis directions and around the B-axis to bring the turning tool T1 to work on the workpiece W1.

Then the turning tool unit U1 for use is intended to be replaced by the rotary drill unit U3 attached to the attaching position P1. The Y-direction driving motor M2 may be controlled by the NC apparatus 7 to position the lower attaching position P1 opposite the spindle axis AX1. The NC apparatus 7 may control the turret head 40 in the X-axis, Y-axis, and Z-axis directions and around the B-axis to bring the rotary drill T3 to work on the workpiece W1.

Further, the Z-axis direction driving motor M4 may be controlled by the NC apparatus 7 to move the turret head 40 to a position to work on the workpiece W2 whose front has been worked. The tool units U0 for back machining use may be switched when the turret head 40 is rotated around the B-axis by the rotation driving motor M1 and moved in the Y-axis direction (D2) by the Y-axis direction driving motor M2.

The turret head 40 has the turret surfaces 41a and 41c arranged at an angle of 180 degrees and the turret surfaces 41b and 41d arranged at an angle of 180 degrees, which enables the lathe 1 to simultaneously machine the workpiece W1 held by the front spindle 31 and the workpiece W2 held by the back spindle 32 by the single turret head 40.

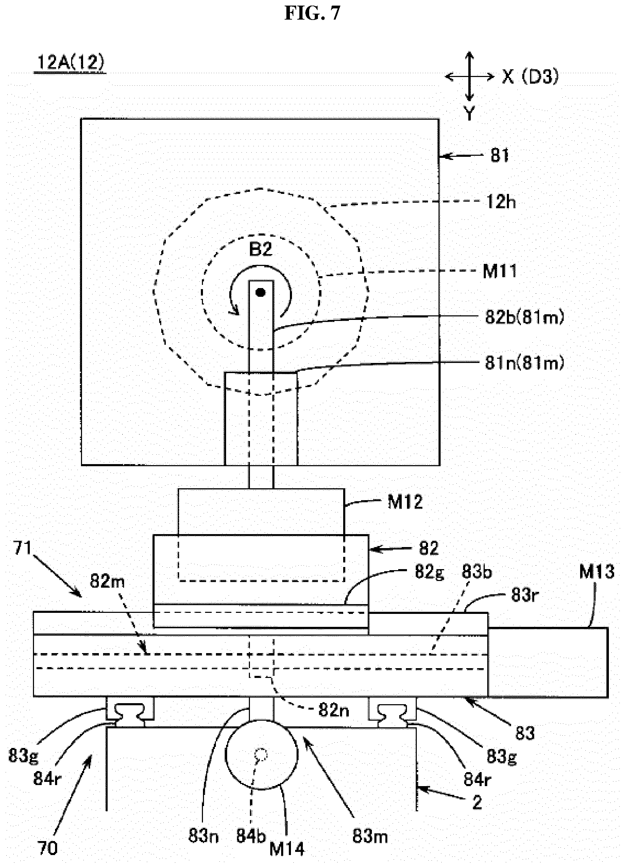

FIG. 7 schematically shows the opposite tool post driving unit 70 for driving the opposite tool post 12A for front machining use in the X-axis, Y-axis, Z-axis, and the rotational directions. The FIG. 7 configuration is only an embodiment. The opposite tool post driving unit 70 may be of various modifications. The opposite tool post driving unit 70 for driving the opposite tool post 12B for back machining use is not shown since it may be of the same configuration except the difference of the B2-axis and the B3-axis.

The opposite tool post driving unit 70 may comprise an elevator 81 containing a rotation driving motor M11 for rotating the turret head 12h on the B2-axis. The rotation driving motor M11 may be a servo motor which rotates the turret head 12h on the B2-axis according to a command from the NC apparatus 7. The elevator 81 may be provided with a nut 81n engaged with a ball screw 82b whose longitudinal direction is along the Y-axis direction. The ball screw 82b and the nut 81n constitute a feeding mechanism 81m which bidirectionally moves the elevator 81 and thereby the turret head 12h on in the Y-axis direction.

The opposite tool post driving unit 70 may further comprise an X-axis direction slide bed 82 provided with a Y-axis direction driving motor M12 which bidirectionally moves the turret head 12h in the Y-axis direction. The Y-axis direction driving motor M12 is a servo motor which rotationally drives the ball screw 82b according to a command from the NC apparatus 7. The turret head 12h on the elevator 81 is moved by the feeding mechanism 81m in the Y-axis direction.

The X-axis direction slide bed 82 may comprise a pair of rails 83r, a pair of guides 82g slidably engaged with the rails 83r in the X-axis direction, and a nut 82n engaged with a ball screw 83b whose longitudinal direction is along the X-axis direction. The ball screw 83b and the nut 82n constitute a feeding mechanism 82m which bidirectionally moves the X-axis direction slide bed 82 and thereby the turret head 12h in the X-axis direction.

The opposite tool post driving unit 70 may further comprise a Z-axis direction slide bed 83 provided with an X-axis direction driving motor M13 which bidirectionally moves the turret head 12h in the X-axis direction. The X-axis direction driving motor M13 is a servo motor which rotationally drives the ball screw 83b according to a command from the NC apparatus 7. The turret head 12h on the X-axis direction slide bed 82 is moved by the feeding mechanism 82m in the X-axis direction. As described, the opposite tool post driving unit 70 moves the turret head 12h in the X-axis direction (D3). The X-axis direction driving motor M13, the X-axis direction slide bed 82, and the feeding mechanism 82m constitute a second opposite driving unit 71.

The Z-axis direction slide bed 83 may comprise a pair of rails 84r, a pair of guides 83g slidably engaged with the rails 84r in the Z-axis direction, and a nut 83n engaged with a ball screw 84b whose longitudinal direction is along the Z-axis direction. The ball screw 84b and the nut 83n constitute a feeding mechanism 83m which bidirectionally moves the Z-axis direction slide bed 83 and thereby the turret head 12h in the Z-axis direction.

The opposite tool post driving unit 70 may further comprise a Z-axis direction driving motor M14 which bidirectionally moves the turret head 12h in the Z-axis direction. The Z-axis direction driving motor M14 is mounted on the bed 2. The Z-axis direction driving motor M14 is a servo motor which rotationally drives the ball screw 84b according to a command from the NC apparatus 7. The turret head 12h on the Z-axis direction slide bed 83 is moved by the feeding mechanism 83m in the Z-axis direction.

The tool units U0 for use are switchable only by rotating the turret head 40 on the B-axis (the indexing axis AX2) and by moving the same in the Y-axis direction (the indexing axis direction D2). The B-axis (a rotation axis) also serves as the Y-axis (a tool selection axis). Only the turret head 40 need be rotated on the B-axis (AX2). The entire turret need not be rotated on the B-axis (AX2). The turret therefore occupies less area compared with a conventional one. There is no need for a guide mechanism for the B-axis and for a servo motor for the B-axis. The embodiment therefore contributes to cost reduction. Further, since the turret head 40 has four turret surfaces 41a, 41b, 41c, and 41d around the B-axis (the indexing axis AX2), any tool unit U0 attached to any non-use surface very rarely interferes with the spindle 30. A machining point of the tool unit U0 working on the workpiece W1 can be brought close to a chucking point of the spindle 30 for a heavy-cut performance and precision operations. Further, the opposite tool post 12 is arranged on the opposite side of the turret head 40 across the spindle 30, enabling the lathe to perform simultaneous operations on the workpiece W1 such as a balance-cut and other complicated machining. The embodiment provides an improvement in productivity.

The number of the turret surface may be preferably four or less to avoid interference of the tool unit U0 with the spindle 30. Instead, a plurality of tool units U0 may be attached to each turret surface 41 in comb-like rows in the Y-axis direction to increase the number of tools for a variety of machining performance. The tool units U0 may be closely arranged to have a shorter stroke in the Y-axis direction. A tool unit adjacent in the Y-axis direction to the tool unit working on the workpiece has a shorter distance with the spindle, resulting in a risk of interference of the adjacent tool unit and the spindle. This problem is serious in a Y-axis related complicated machining. Also in the turret head 12h having twelve turret surfaces where the tool units U0 are closer to each other, a tool unit adjacent to the tool unit working on the workpiece has a shorter distance with the spindle, resulting in a risk of interference of the adjacent tool unit and the spindle.

In this embodiment, when the tool unit U0 is working on the workpiece, the tool unit adjacent to the tool unit U0 in the tool unit attaching direction D4 is of a shape avoiding the interference with the spindle 30.

### (3) Configuration of tool unit:

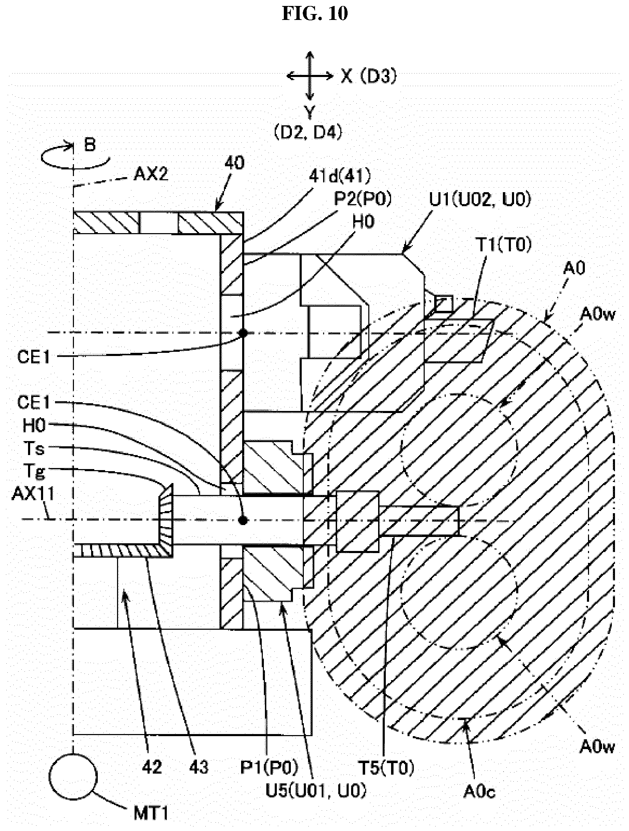

As shown in FIG. 6, the attaching positions P1, P2 are adjacent to each other in the tool unit attaching direction D4 perpendicular to the Z-axis direction (D1). When the first tool unit U01 attached to the first attaching position P1 is working on the workpiece W1, the second tool unit U02 attached to the second attaching position P02 has an interference risk with the spindle 30. Bringing the tool edge (the machining point) apart from the chuck could avoid the interference risk but would make a heavy-cut performance difficult. In the embodiment, the tool units U0 each may be of such shape as avoiding a spindle occupation area A0 (FIG. 10, 11) that the spindle 30 possibly occupies relatively with respect to the tool unit working on the workpiece. The tool unit working on the workpiece is referred to as the first tool unit U01 and another tool unit adjacent to the first tool unit U01 in the tool unit attaching direction D4 is referred to as the second tool unit U02. The first tool unit U01 may be a rotary drill unit U3 while the second tool unit U02 may be a turning tool unit U1.

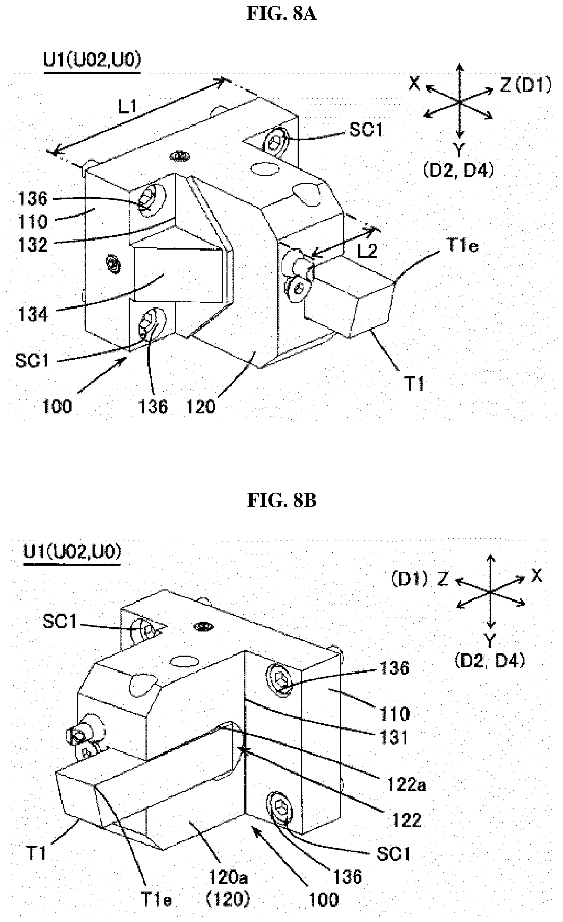

FIG. 8A and 8B schematically show the appearance of the turning tool unit U1. The turning tool unit U1 may comprise a turning tool T1 and a holder 100 for holding a shank for the turning tool T1. The holder 100 may have a attaching part 110 removably attached to the attaching position P0 of the turret surface 41 and a holding part 120 for holding the turning tool T1. The holding part 120 is extended from the attaching part 110 in the direction away from the turret surface 41. The holding part 120 has a concave 122 for receiving the shank for the turning tool T1 (FIG. 8B) . The holding part 120 has an opening 122a for the concave 122 at only one of end surfaces 120a in the Z-axis direction (D1). The holder 100 may have a recess 131 on the side of the opening 122a of the holding part 120 and another recess 132 on the opposite side thereof. The recesses 131 and 132 are formed in an area where the attaching part 110 and the holding part 120 meet. The attaching part 110 has screw receiving holes 136 for screws SC1 to be inserted from the recesses 131 and 132. The holder 100 may further have a rib 134 formed in the recess 132 to connect the attaching part 110 and the holding part 120. The rib 134 is provided between the upper screw receiving hole 136 and the lower screw receiving hole 136. The rib 132 is extended from the attaching part 110 to be closer toward the holding part 120, thereby forming a substantially triangular prism shape.

The turning tool unit U1 is of substantially "T" shape when viewed from the Y-axis direction (D4). The turning tool unit U1 may be of a shape satisfying L2 < L1 as measured when the turning tool unit U1 is in a position working on the workpiece, where L1 is the length of the attaching part 110 in the Z-axis direction (D1) and L2 is the length of the holding part 120 in the Z-axis direction (D1) excluding the length of the rib 134. The holding part 120 of the turning tool unit U1 may be shorter than the attaching part 110 in length in the Z-axis direction as measured when the turning tool unit U1 is in a position working on the workpiece. The turning tool unit U1 of such shape would not enter the spindle occupation area A0 that the spindle 30 possibly occupies with respect to the tool unit U0 working on the workpiece when the tool unit U0 and the turning tool unit U1 are adjacent to each other in the tool unit attaching direction D4. Regarding the other tool units U0 but the turning tool unit U1, the holding part 120 may be shorter than the attaching part 110 in length in the Z-axis direction as measured when the turning tool unit U1 is in a position working on the workpiece. The tool unit U0 of such shape would not enter the spindle occupation area A0.

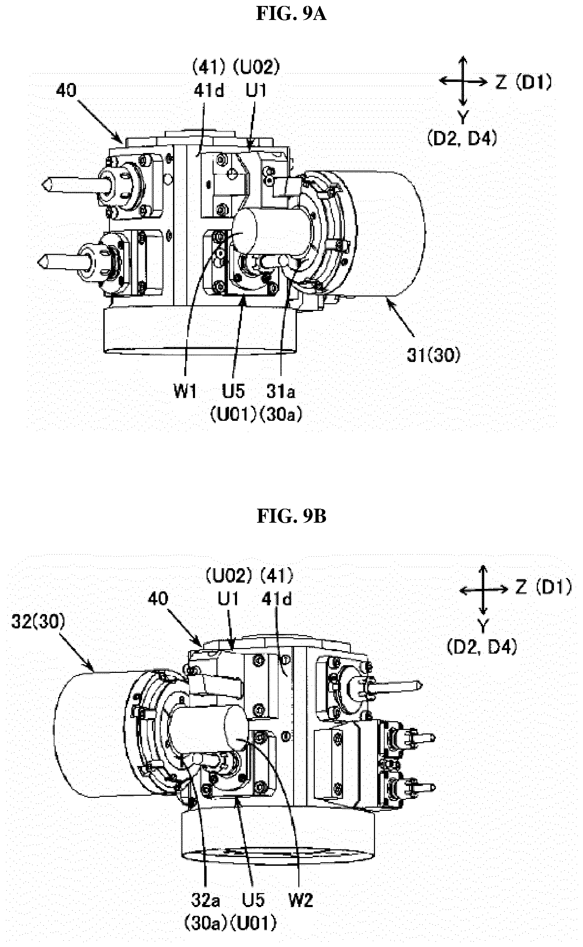

FIG. 9A schematically shows a condition in which the workpiece W1 held by the front spindle 31 is in a position between the first tool unit U01 and the second tool unit U02. FIG. 9B schematically shows a condition in which the workpiece W1 held by the back spindle 32 is in a position between the first tool unit U01 and the second tool unit U02. The first tool unit U01 may be the endmill unit U5 and the second tool unit U02 may be the turning tool unit U1. The endmill unit U5 can be brought close to the chuck 30a since the turning tool unit U1 is of a shape avoiding the spindle occupation area A0.

Next, the method of designing the shape of the tool unit U0 is being described. FIG. 10 and FIG. 11 each schematically shows the spindle occupation area A0 (hatched area) that the spindle 30 possibly occupies with respect to the first tool unit working on the workpiece W1. FIG. 10 shows the endmill unit U5 (the first tool unit U01) and the turning tool unit U1 (the second tool unit U02) viewed from the Z-axis direction. FIG. 11 shows the turning tool unit U1 (the second tool unit U02) viewed from the Y-axis direction.

The endmill unit U5 when used as the first tool unit U01 is required to pass a circle area A0w corresponding to the maximum diameter of the workpiece W1 in the Y-axis direction. The circle area A0w is assumed to contact both sides of the tool edge of the endmill unit U5 in the Y-axis direction. When the tool edge of the endmill unit U5 moves along the border of the circle area A0w in the X-axis and Z-axis directions, the spindle 30 possibly occupies a three-dimensional area relatively with respect to the endmill unit U5. The three-dimensional area is the spindle-occupation area with respect to the endmill unit U5. The three-dimensional area occupied by the spindle 30 is extended in the X-axis, Y-axis, and Z-axis directions depending on the contours of the spindle 30. In FIG. 10, the upper circle area A0W is an area corresponding to the maximum diameter of the workpiece W1 when the endmill T5 is in a position on the lower side of the workpiece W1, thereby making the workpiece W1 in a position between the endmill T5 and the tool T0 (the turning tool T1) of the second tool unit U02. The lower circle area A0W is an area corresponding to the maximum diameter of the workpiece W1 when the endmill T5 is in a position on the upper side of the workpiece W1. An area A0c denoted by a two-dot chain line on the outside of the circle area A0W and on the inside of the spindle occupation area A0 is a three-dimensional area occupied by the chuck 30a smaller than the spindle 30 in diameter. The three-dimensional area of the chuck 30a depends on the contours of the chuck 30a. The area A0c has a cut portion A0n in a view shown in FIG. 11 and FIG. 12.

The tool unit U0 to be attached to the first attaching position P1 is not limited to the endmill unit U5. When the tool edge of the tool unit U0 moves along the border of the circle area A0w, the spindle 30 possibly occupies a three-dimensional area with respect to the tool unit U0, which is to be defined as the spindle-occupation area with respect to the tool unit U0. The sum or the pile of the spindle-occupation areas of the tool units U0 is the spindle occupation area A0 to be used in designing the shape of the second tool unit U02. The spindle occupation area A0 may be a three-dimensional area that the spindle 30 possibly occupies with respect to at least one of the tool units U0 working on the workpiece W1 among all types of the tool units U0 attachable to the first attaching position P1.

The spindle 30 may comprise the front spindle 31 and the back spindle 32 (FIG. 1). The spindle occupation area A0 may comprise a front-spindle occupation area A1 that the front spindle 31 possibly occupies with respect to the first tool unit 01 and a back-spindle occupation area A2 that the back spindle 32 possibly occupies with respect to the first tool unit U01 as shown in FIG. 11. The front-spindle occupation area A1 may be an area that the front spindle 31 possibly occupies with respect to the first tool unit U01 when the front side of the workpiece W1 is machined by the first tool unit U01 as shown in FIG. 9A. The back-spindle occupation area A2 may be an area that the back spindle 32 possibly occupies with respect to the first tool unit U01 when the back side of the workpiece W2 is machined by the first tool unit U01 as shown in FIG. 9B.

The shape of the second tool unit U02 may be designed to be the maximum size in a range avoiding the spindle occupation area A0. As shown in FIG. 10 and FIG. 11, the spindle occupation area A0 is not extended near the turret surface 41, allowing the attaching part 110 of the second tool unit U02 to be designed to wider shape. The spindle occupation area A0 is extended over the second tool unit U02 in a position away from the turret surface 41 viewed from the Z-axis direction (FIG. 10), but there still exists a clearance CL1 viewed from the Y-axis direction (FIG. 11) between the front-spindle occupation area A1 and the back-spindle occupation area A2. The holding part 120 of the tool T0 (the turning tool T1) can be designed to a shape enough to fit into the clearance CL1 to avoid the interference of the second tool unit U02 with the spindle 30. In the embodiment, the tool T0 (the endmill T5 in FIG. 10) of the first tool unit U01 can be bought close to the chuck 30a to machine the workpiece. The first tool unit U01 is thereby given high flexibility in machining performance. The tool unit U0 may be favorably of a shape whose holding part 120 is shorter than the attaching part 110 in length in the Z-axis direction as measured when the tool unit U0 is in a position working on the workpiece.

A machining point P10 of the tool unit U0 may be brought close to the spindle 30 (FIG. 11) except for the rotary tool unit where the rotary tool such as the rotary drill T3 (FIG. 6) and the endmill T5 (FIG. 10) is rotated on the rotation axis AX11 extended across the turret surface 41. The machining point P10 is an acting point of a tool of a tool unit working on the workpiece W1. The machining point P10 of the turning tool unit U1 is a tool edge T1e (FIG. 11) of the turning tool T1. The machining point P10 of the polygon cutter unit is a tool edge (not shown) of the rotary tool.

When the rotary tool unit (the endmill unit U5 in FIG. 10 and FIG. 11) is attached to the lower first attaching position P1, the rotational center CE1 of the rotary tool unit may be in a position crossing the turret surface 41. When the tool unit U0 whose machining point is off the center is attached to the second attaching position P2, the machining point P10 of the tool unit U0 is deviated to the side of the spindle 30 in the Z-axis direction from the rotational center CE1 in the first attaching position P1. The tool edge T1e (the machining point) of the turning tool unit U1 is deviated to the side of the front spindle 31 in the Z-axis direction (FIG. 11). A heavy-cut performance on the workpiece W1 held by the chuck 31a is available by the turning tool unit U1 having the tool edge T1e closer to the chuck 31a of the front spindle 31.

The tool unit U0 may be inversely attached to the attaching position P0 of the turret surface 41 by an angle of 180 degrees. FIG. 12 schematically shows that the turning tool unit U1 is inversely attached to the second attaching position P2 of the turret surface 41b by an angle of 180 degrees. In FIG. 11, the turning tool unit U1 is attached to the second attaching position P2 in a first orientation in which the machining point P10 is deviated to the side of the front spindle 31 from the rotational center CE1 in the Z-axis direction (D2). In FIG. 12, the turning tool unit U1 is attached to the second attaching position P2 in a second orientation in which the machining point P10 is deviated to the side of the back spindle 32 from the rotational center CE1 in the Z-axis direction (D2). The method of inversely attaching the tool unit U0 at an angle of 180 degrees is being described referring to FIG. 2, FIG. 3, FIG. 8A, and FIG. 8B.

The tool unit U0 can be detached from the attaching position P0 by removing the four screws SC1 fastening the tool unit U0. The detached tool unit U0 is inverted at an angle of 180 degrees so that the screw receiving holes 136 of the tool unit U0 face the screw holes H1 of the attaching position P0. The removed screws SC1 are then inserted into the screw receiving holes 136 to be engaged with the screw holes H1 so that the tool unit U0 is inversely attached to the attaching position P0. The turning tool unit U1 in FIG. 12 is an inverted example of the turning tool unit U1 in FIG. 11.

The tool edge T1e (the machining point P10) of the turning tool unit U1 is deviated to the side of the back spindle 32 in the Z-axis direction (D2). A heavy-cut performance on the workpiece W2 held by the chuck 32a is available by the turning tool unit U1 having the tool edge T1e closer to the chuck 32a of the back spindle 32. The distance between the machining point P1 and the chuck 30a may be preferably shorter, for example in a range of 0.5 mm to 8 mm, favorably in the range of 1 mm to 4 mm.

The rotary tool unit can be attached to the second attaching position P2 if the rotation driving unit is provided for the second attaching position P2. The rotational center CE1 of the rotary tool unit may be in a position crossing the turret surface 41. Instead, the tool unit U0 whose machining point is off the center may be attached to the second attaching position P2. The machining point P10 of the tool unit U0 is deviated to the side of the spindle 30 in the Z-axis direction from the rotational center CE1 in the second attaching position P2.

The first attaching position P1 is the lower position while the second attaching position P2 is the upper position in FIG. 2, FIG. 3, FIG. 6, and FIG. 10 only for explanation convenience. The first attaching position P1 may be the upper position while the second attaching position P2 may be the lower position.

The tool unit U0 (the second tool unit U02) may be of a shape avoiding the spindle occupation area A0 that the spindle 30 possibly occupies with respect to the tool unit (the first tool unit U01) adjacent to in the tool unit attaching direction. The tool unit (the second tool unit U02) adjacent to the tool unit (the first tool unit U01) working on the workpiece does not interfere with the spindle 30. Further, the adjacent tool unit (the second tool unit U02) is available for a heavy-cut performance since whose machining point P10 is brought close to the chuck 30a of the spindle 30. The tool unit U0 can be inversely oriented for both front machining use and back machining use, reducing types of the tool units attached to the turret head. The embodiment provides high productivity and versatile functions at a lower cost in a compact lathe.

### (4) Modifications

The invention is not limited to a lathe of stationary headstock type. The lathe comprises a lathe of slidable headstock type in which the front spindle is bidirectionally movable in the Z-axis direction. The lathe may be provided with a guide bush for holding the chucked workpiece. The guide bush may be rotatable with the spindle. The invention is not limited to the opposite tool post movable in the X-axis, Y-axis, and Z-axis directions. An opposite tool post not movable in the Y-axis direction is within the scope of the invention.

The number of turret surfaces is not limited to four. The technology of the invention is also applicable to the turret head 40 having three turret surfaces or five or more turret surfaces. The tool unit attached to the attaching position P0 may not be necessarily the one avoiding the spindle occupation area A0. The technology of the invention is also applicable to the embodiment where the tool unit avoiding the spindle occupation area is attached to part of the attaching positions P0 and the tool unit invading the spindle occupation area is attached to the rest of the attaching positions P0. The technology is also applicable to a turret head having twelve turret surfaces such as the turret head 12h of the opposite tool post 12 wherein the tool units attached to each turret surface has a smaller interval with the adjacent tool unit

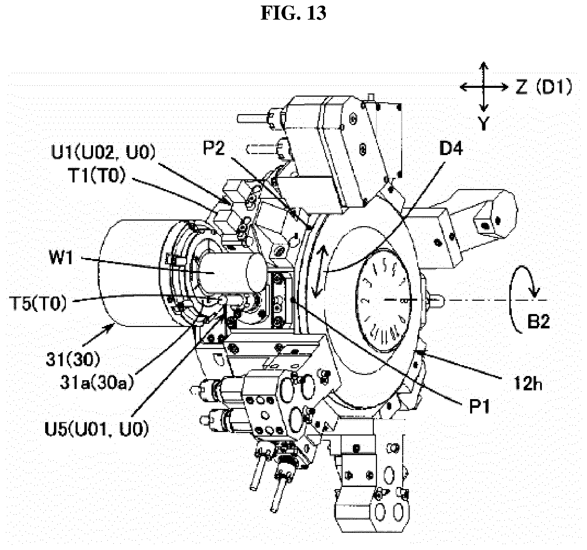

FIG. 13 schematically shows that workpiece W1 held by the chuck 31a of the front spindle 31 is in a position between the first tool unit U01 and the second tool unit U02 of the opposite tool post 12A. The direction connecting the attaching position P1 of the first tool unit U01 and the attaching position P2 of the second tool units U2 is the tool unit attaching direction D4. The first tool unit U01 may be the endmill unit U5 while the second tool unit U02 may be the turning tool unit U1. The opposite tool post for front machining use 12A is not available for back machining use. The tool unit U0 may be enough of the shape avoiding the front spindle occupation area A1.

The tool unit U0 (the second tool unit U02) attached to each turret surface of the turret head 12h may be of a shape avoiding the front-spindle occupation area A1 that the front spindle 31 possibly occupies with respect to the tool unit (the first tool unit U01) adjacent to in the tool unit attaching direction. The tool unit (the second tool unit U02) adjacent to the tool unit (the first tool unit U01) working on the workpiece does not interfere with the front spindle 31. Further, the adjacent tool unit (the second tool unit U02) is available for a heavy-cut performance since whose machining point P10 is brought close to the chuck 31a of the front spindle 31. Also regarding the opposite tool post for back machining use 12B (not shown), the tool unit U0 (the second tool unit U02) attached to each turret surface of the turret head 12h may be of a shape avoiding the back-spindle occupation area A2 that the back spindle 32 possibly occupies with respect to the tool unit (the first tool unit U01) adjacent to in the tool unit attaching direction. The tool unit (the second tool unit U02) adjacent to the tool unit (the first tool unit U01) working on the workpiece does not interfere with the back spindle 32. Further, the adjacent tool unit (the second tool unit U02) is available for a heavy-cut performance since whose machining point P10 is brought close to the chuck 32a of the back spindle 32.

The tool unit attached to the attaching position P0 of the turret head 12h may not be necessarily the one avoiding the spindle occupation area A0. The technology of the invention is also applicable to the embodiment where the tool unit avoiding the spindle occupation area A0 is attached to part of the attaching positions P0 and the tool unit invading the spindle occupation area is attached to the rest of the attaching positions P0.

A lathe not provided with an opposite tool post is within the scope of the invention as far as the tool unit attached to the turret head can work on the workpiece. A turret head not movable in the X-axis and Z-axis directions is within the scope of the invention as far as the tool unit attached to the turret head can work on the workpiece. The indexing axis direction may be a direction except the Y-axis direction as far as the tool unit attached to the turret head can work on the workpiece. A lathe not provided with the back spindle is within the scope of the invention as far as the tool unit attached to the turret head can work on the workpiece.

### (5) Conclusion:

As described above, the invention provides a technology capable of improving machining performance of the lathe. The advantageous effects of the invention are available in a technology embodied only by the requirements recited in an independent claim.

### DESCRPTION OF SYMBOLS

- 1: lathe
- 2: bed
- 7: NC apparatus
- 11: turret
- 12, 12A, 12B: opposite tool post
- 12h: turret head
- 20: headstock
- 21: front headstock
- 22: back headstock
- 30: spindle
- 31: front spindle
- 32: back spindle
- 30a,31a,32a: chuck
- 40: turret head
- 41, 41a to 41d: turret surface
- 42: rotation driving unit
- 43: driving gear
- 50: turret driving unit
- 70: opposite tool post driving unit
- 100: holder
- 110: attaching part
- 120: tool holding part
- 122: concave
- 131,132: recess
- 134: rib
- 136: screw receiving hole
- A0, A0w,A1,A2: area
- AX1: spindle axis
- AX2: indexing axis
- AX11: rotating axis
- CE1: rotational center
- CL1: clearance
- D1: spindle axis direction
- D2: indexing axis direction
- D3: tool post opposite direction
- D4: tool unit attaching direction
- P0, P1, P2: attaching position
- P10: machining point
- T0: tool
- T1: turning tool
- T1e: tool edge
- T2: drill
- T3,T4: rotary drill
- T5: endmill
- Tg: driven gear
- Ts: rotary tool shaft
- U0: tool unit
- U01: first tool unit
- U02: second tool unit
- U1: turning tool unit
- U2: drill unit
- U3,U4: rotary drill unit
- U5: endmill unit
- W1: workpiece
- W2: front-machined workpiece

## Claims

1. A lathe (1) comprising:
a spindle (30) which rotates a workpiece (W1) on a spindle axis (AX1);
a turret head (12h, 40) having a turret surface (41) having a plurality of attaching positions (P0), the plurality of attaching positions (P0) comprising a first attaching position (P1) and a second attaching position (P2), the first attaching position (P1) and the second attaching position (P2) being adjacent to each other in a tool unit attaching direction (D4) perpendicular to a spindle axis direction (D1) extended along the spindle axis (AX1), and to the first attaching position (P1) a first tool unit (U01) being removably attached and to the second attaching position (P2) a second tool unit (U02) being removably attached; and
a tool unit switching driver which switches the tool units (U01, U02) for use to machine the workpiece (W1),
wherein the second tool unit (U02) is of a shape avoiding a spindle occupying area (A0) that is capable of being occupied by the spindle (30) during a time when the first tool unit (U01) works on the workpiece (W1), and
wherein at least one of the first tool unit (U01) and the second tool unit (U02) comprises a rotary tool unit,
**characterized in that** when the rotary tool unit is attached to the first attaching position (P1), a distance in the spindle axis direction (D1) from the spindle (30) to a machining point (P10) of the second tool unit (U02) working on the workpiece (W1) is shorter than a distance in the spindle axis direction (D1) from the spindle (30) to a rotational center (CE1) of the rotary tool unit across the turret surface (41),
wherein the second tool unit (U02) has an attaching part (110) to be attached to the second attaching position (P2) of the turret surface (41) and a tool holding part (120) arranged on one side of the attaching part (110) that is a side apart from the turret surface (41),
wherein the tool holding part (120) is shorter than the attaching part (110) in length in the spindle axis direction (D1) when the second tool unit (U02) is in a position working on the workpiece (W1), and
wherein the tool holding part (120) has a concave (122) for receiving a shank of a tool (T1), the concave (122) being formed at only one end surface (120a) among two end surfaces of the tool holding part (120) opposing each other.

2. The lathe (1) of claim 1, wherein the spindle (30) comprises a front spindle (31) and a back spindle (32) opposite to each other in the spindle axis direction (D1), wherein the second tool unit (U02) is attached to the second attaching position (P2) in one of a first orientation and a second orientation,
wherein in the first orientation, a distance in the spindle axis direction (D1) from the front spindle (31) to the machining point (P10) of the second tool unit (U02) working on the workpiece (W1) is shorter than a distance in the spindle axis direction (D1) from the front spindle (31) to the rotational center (CE1) of the rotary tool unit across the turret surface (41), and,
wherein in the second orientation, a distance in the spindle axis direction (D1) from the back spindle (32) to the machining point (P10) of the second tool unit (U02) working on the workpiece (W1) is shorter than a distance in the spindle axis direction (D1) from the back spindle (32) to the rotational center (CE1) of the rotary tool unit across the turret surface (41).

3. The lathe (1) of claim 1 or 2, wherein the second tool unit (U02) comprises a turning tool unit (U1) having a turning tool (T1).

4. The lathe (1) of any of claims 1 to 3, wherein the second tool unit (U02) has a rib (134) extended from the attaching part (110) to the tool holding part (120) at the other end surface among the two end surfaces of the tool holding part (120) opposing each other.

## Patentansprüche

1. Drehmaschine (1), umfassend:
eine Spindel (30), die ein Werkstück (W1) um eine Spindelachse (AX1) dreht;
einen Revolverkopf (12h, 40) mit einer Revolverfläche (41), die eine Vielzahl von Befestigungspositionen (P0) aufweist, wobei die Vielzahl von Befestigungspositionen (P0) eine erste Befestigungsposition (P1) und eine zweite Befestigungsposition (P2) umfassen, die erste Befestigungsposition (P1) und die zweite Befestigungsposition (P2) in einer Werkzeugeinheit-Befestigungsrichtung (D4) senkrecht zu einer Spindelachsenrichtung (D1), die sich entlang der Spindelachse (AX1) erstreckt, aneinander angrenzen, und an der ersten Befestigungsposition (P1) eine erste Werkzeugeinheit (U01) abnehmbar befestigt ist und an der zweiten Befestigungsposition (P2) eine zweite Werkzeugeinheit (U02) abnehmbar befestigt ist; und
einen Werkzeugeinheiten-Schalttreiber, der die Werkzeugeinheiten (U01, U02) zur Verwendung bei der Bearbeitung des Werkstücks (W1) schaltet,
wobei die zweite Werkzeugeinheit (U02) eine Form hat, die einen Spindelbelegungsbereich (A0) vermeidet, der von der Spindel (30) während einer Zeit belegt werden kann, in der die erste Werkzeugeinheit (U01) an dem Werkstück (W1) arbeitet, und
wobei mindestens eine von der ersten Werkzeugeinheit (U01) und der zweiten Werkzeugeinheit (U02) eine Rotationswerkzeugeinheit umfasst,
**dadurch gekennzeichnet, dass**, wenn die drehbare Werkzeugeinheit an der ersten Befestigungsposition (P1) befestigt ist, ein Abstand in der Spindelachsenrichtung (D1) von der Spindel (30) zu einem Bearbeitungspunkt (P10) der zweiten Werkzeugeinheit (U02), die an dem Werkstück (W1) arbeitet, kürzer ist als ein Abstand in der Spindelachsenrichtung (D1) von der Spindel (30) zu einem Rotationszentrum (CE1) der Rotationswerkzeugeinheit über der Revolverfläche (41),
wobei die zweite Werkzeugeinheit (U02) ein Befestigungsteil (110), das an der zweiten Befestigungsposition (P2) der Revolverfläche (41) zu befestigen ist, und ein Werkzeughalteteil (120) aufweist, das auf einer Seite des Befestigungsteils (110) angeordnet ist, die eine von der Revolverfläche (41) entfernte Seite ist,
wobei das Werkzeughalteteil (120) in der Spindelachsenrichtung (D1) kürzer ist als das Befestigungsteil (110), wenn sich die zweite Werkzeugeinheit (U02) in einer Position befindet, in der sie das Werkstück (W1) bearbeitet, und
wobei das Werkzeughalteteil (120) eine Konkavität (122) zur Aufnahme eines Schaftes eines Werkzeugs (T1) aufweist, wobei die Konkavität (122) an nur einer Endfläche (120a) von zwei einander gegenüberliegenden Endflächen des Werkzeughalteteils (120) ausgebildet ist.

2. Drehmaschine (1) nach Anspruch 1,
wobei die Spindel (30) eine vordere Spindel (31) und eine hintere Spindel (32) umfasst, die in der Spindelachsenrichtung (D1) einander gegenüberliegen, wobei die zweite Werkzeugeinheit (U02) an der zweiten Befestigungsposition (P2) in einer ersten Orientierung oder einer zweiten Orientierung angebracht ist,
wobei in der ersten Orientierung ein Abstand in der Spindelachsenrichtung (D1) von der vorderen Spindel (31) zu dem Bearbeitungspunkt (P10) der zweiten Werkzeugeinheit (U02), die an dem Werkstück (W1) arbeitet, kürzer ist als ein Abstand in der Spindelachsenrichtung (D1) von der vorderen Spindel (31) zu dem Rotationszentrum (CE1) der Rotationswerkzeugeinheit über der Revolverfläche (41), und
wobei in der zweiten Orientierung ein Abstand in der Spindelachsenrichtung (D1) von der hinteren Spindel (32) zu dem Bearbeitungspunkt (P10) der zweiten Werkzeugeinheit (U02), die an dem Werkstück (W1) arbeitet, kürzer ist als ein Abstand in der Spindelachsenrichtung (D1) von der hinteren Spindel (32) zu dem Rotationszentrum (CE1) der Rotationswerkzeugeinheit über der Revolverfläche (41).

3. Drehmaschine (1) nach Anspruch 1 oder 2, wobei die zweite Werkzeugeinheit (U02) eine Drehwerkzeugeinheit (U1) mit einem Drehwerkzeug (T1) umfasst.

4. Drehmaschine (1) nach einem der Ansprüche 1 bis 3, wobei die zweite Werkzeugeinheit (U02) eine Rippe (134) aufweist, die sich von dem Befestigungsteil (110) zu dem Werkzeughalteteil (120) an der anderen Endfläche zwischen den beiden Endflächen des Werkzeughalteteils (120), die einander gegenüberliegen, erstreckt.

## Revendications

1. Tour (1) comprenant :
une broche (30) qui met en rotation une pièce à oeuvrer (W1) sur un axe de broche (AX1) ;
une tête de tourelle (12h, 40) présentant une surface de tourelle (41) ayant une pluralité de positions de fixation (P0), la pluralité de positions de fixation (P0) comprenant une première position de fixation (P1) et une seconde position de fixation (P2), la première position de fixation (P1) et la seconde position de fixation (P2) étant adjacentes l'une à l'autre dans une direction de fixation d'unité d'outil (D4) perpendiculaire à une direction d'axe de broche (D1) en extension le long de l'axe de broche (AX1), et à la première position de fixation (P1) une première unité d'outil (U01) étant fixée de manière détachable, et à la seconde position de fixation (P2) une seconde unité d'outil (U02) étant fixée de manière détachable ; et
un pilote de commutation d'unité d'outil qui commute les unités d'outil (U01, U02) destinées à être utilisées pour usiner la pièce à oeuvrer (W1),
dans lequel la seconde unité d'outil (U02) est d'une forme évitant une zone occupée par une broche (A0) qui est capable d'être occupée par la broche (30) pendant un moment où la première unité d'outil (U01) travaille sur la pièce à oeuvrer (W1), et
dans lequel l'une au moins de la première unité d'outil (U01) et de la seconde unité d'outil (U02)comprend une unité d'outil rotatif,
**caractérisé en ce que**
quand l'unité d'outil rotatif est fixée à la première position de fixation (P1), une distance dans la direction d'axe de broche (D1) depuis la broche (30) jusqu'à un point d'usinage (P10) de la seconde unité d'outil (U02) travaillant sur la pièce à oeuvrer (W1) est plus courte qu'une distance dans la direction d'axe de broche (D1) depuis la broche (30) jusqu'à un centre de rotation (CE1) de l'unité d'outil rotatif à travers la surface de tourelle (41),
dans lequel la seconde unité d'outil (U02) a une partie de fixation (110) à fixer à la seconde position de fixation (P2) de la surface de tourelle (41) et une partie de maintien d'outil (120) agencée sur un côté de la partie de fixation (110) qui est un côté à distance de la surface de tourelle (41),
dans lequel la partie de maintien d'outil (120) est plus courte que la partie de fixation (110) en longueur dans la direction d'axe de broche (D1) quand la seconde unité d'outil (U02) est dans une position travaillant sur la pièce à oeuvrer (W1), et
dans lequel la partie de maintien d'outil (120) a une partie concave (122) pour recevoir une tige d'un outil (T1), la partie concave (122) étant formée uniquement au niveau d'une surface d'extrémité (120a) parmi deux surfaces d'extrémité de la partie de maintien d'outil (120) opposées d'une à l'autre.

2. Tour (1) selon la revendication 1, dans lequel la broche (30) comprend une broche avant (31) et une broche arrière (32) opposées l'une à l'autre dans la direction d'axe de broche (D1), dans lequel la seconde unité d'outil (U02) est fixée à la seconde position de fixation (P2) dans une orientation parmi une première orientation et une seconde orientation,
dans lequel, dans la première orientation, une distance dans la direction d'axe de broche (D1) depuis la broche avant (31) jusqu'au point d'usinage (P10) de la seconde unité d'outil (U02) travaillant sur la pièce à oeuvrer (W1) est plus courte qu'une distance dans la direction d'axe de broche (D1) depuis la broche avant (31) jusqu'au centre de rotation (CE1) de l'unité d'outil rotatif à travers la surface de tourelle (41), et
dans lequel, dans la seconde orientation, une distance dans la direction d'axe de broche (D1) depuis la broche arrière (32) jusqu'au point d'usinage (P10) de la seconde unité d'outil (U02) travaillant sur la pièce à oeuvrer (W1) est plus courte qu'une distance dans la direction d'axe de broche (D1) depuis la boche arrière (32) jusqu'au centre de rotation (CE1) de l'unité d'outil rotatif à travers la surface de tourelle (41).

3. Tour (1) selon la revendication 1 ou 2, dans lequel la seconde unité d'outil (U02) comprend une unité d'outil de tournage (U1) ayant un outil de tournage (T1).

4. Tour (1) selon l'une quelconque des revendications 1 à 3, dans lequel la seconde unité d'outil (U02) a une nervure (134) s'étendant depuis la partie de fixation (110) jusqu'à la partie de maintien d'outil (120) au niveau de l'autre surface d'extrémité parmi les deux surfaces d'extrémité de la partie de maintien d'outil (120) opposées l'une à l'autre.
